# FASCICULE DE BREVET EUROPEEN

(11) **EP 3 332 950 B1**
(45) Date de publication et mention de la délivrance du brevet: **21.10.2020**
(21) Numéro de dépôt: 17205596.4
(22) Date de dépôt: 06.12.2017
(51) Int. Cl.: B29C 70/44, B29C 70/54, B29C 43/36, B29K 21/00

(54) **BÂCHE À VIDE POUR UN PROCÉDÉ D'INFUSION DE MATÉRIAUX COMPOSITE COMPRENANT UN FLUOROÉLASTOMÈRE, UTILISATION ET PROCEDE DE FABRICATION**
VAKUUMBEHÄLTER FÜR EIN INFUSIONSVERFAHREN VON VERBUNDMATERIALIEN, DIE EIN FLUORELASTOMER UMFASSEN, VERWENDUNG UND HERSTELLUNGSVERFAHREN
VACUUM COVER FOR A METHOD FOR INFUSION OF COMPOSITE MATERIALS COMPRISING A FLUOROELASTOMER, USE AND MANUFACTURING METHOD

(30) Priorité: 08.12.2016 FR 1662151
(43) Date de publication de la demande: 13.06.2018
(73) Titulaire: Commissariat à l'énergie atomique et aux énergies alternatives, 75015 Paris (FR)
(72) Inventeur: PIETRI, Thomas, 38000 Grenoble (FR); BARRE, Damien, 85170 Dompierre sur Yon (FR)
(74) Mandataire: Brevalex

(56) Documents cités:
- EP-A2- 0 319 449
- US-A- 4 842 670
- US-A1- 2006 022 380
- US-A1- 2011 076 462

## Description

### DOMAINE TECHNIQUE

La présente invention se rapporte au domaine général des bâches à vide utilisées pour la mise en œuvre du procédé dit « d'infusion » de matériaux composites.

L'invention trouve des applications dans de nombreux domaines de l'industrie, et notamment dans les domaines de l'agriculture, de l'aéronautique, de l'éolien, de l'outillage et du nautisme.

Plus précisément, l'invention concerne une bâche à vide pour un procédé d'infusion de matériaux composites comprenant un fluoroélastomère, un procédé d'infusion de matériaux composites utilisant une telle bâche et un procédé de fabrication d'une telle bâche.

### ÉTAT DE LA TECHNIQUE ANTÉRIEURE

Le procédé d'infusion permet la réalisation de diverses pièces en matériaux composites, notamment des pièces de grandes dimensions. Il consiste en la mise sous vide, dans un moule fermé par une bâche, de renforts secs qui sont imprégnés par la suite avec l'arrivée de résine aspirée par la dépression créée dans le moule.

Dans le domaine du nautisme par exemple, le procédé d'infusion est couramment employé pour la réalisation de pièces en matériau composite de type résine polyester/fibres de verre, par exemples des coques de bateau. Le procédé consiste alors à faire migrer une résine polyester insaturée ayant pour solvant réactif le styrène et son catalyseur dans des renforts de fibres de verre sous l'action du vide.

Pour ce faire, une bâche plastique de type bi-couche polyamide (PA)/polyethylène (PE) ou de type tri-couche polyethylène (PE)/polyamide (PA)/ polyethylène (PE) est classiquement utilisée. L'usage du polyethylène (PE) permet de diminuer les coûts, d'améliorer la flexibilité en conférant des propriétés moins cassantes et sert de démoulant. L'usage du polyamide (PA) permet de former une barrière étanche, d'avoir une température d'utilisation plus élevée et d'avoir une bonne résistance mécanique.

Ces bâches de l'art antérieur sont commercialisées sous la forme d'un film plastique, typiquement de forme rectangulaire avec une largeur maximale de 16 mètres.

Ces bâches connues présentent de nombreux inconvénients, notamment dans le cadre de leur utilisation pour le nautisme. En particulier, elles présentent une durée de vie trop faible puisqu'elles sont utilisées comme consommables à usage unique lors du procédé d'infusion. De plus, leur mise en œuvre est très complexe et nécessite des opérateurs formés. Le temps d'application de ces bâches plastiques est notamment très long, à savoir plus de 30 heures, ce qui représente un coût non négligeable dans le procédé de fabrication des coques de bateaux. En outre, la largeur maximale de ces bâches étant limitée à 16 mètres du fait de leur procédé de fabrication (extrusion soufflage), cela limite la taille des bateaux ou du moins nécessite de réaliser les grands bateaux, dont la largeur de coque est supérieure à 8-10 mètres, par le biais de deux demi-coques par exemple. Il est également possible de souder les bâches entre elles, cependant les zones partiellement soudées sont problématiques lors du procédé d'infusion et de tels problèmes de soudure arrivent fréquemment.

Par ailleurs, la demande EP 0 319 449 A2 enseigne la fabrication d'un article composite comprenant du fluoroélastomère.

### EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, une bâche à vide pour un procédé d'infusion de matériaux composites, notamment des matériaux composites de type résine polyester/fibres de verre, caractérisée en ce qu'elle comporte un fluoroélastomère.

De façon avantageuse, les fluoroélastomères présentent une très grande résistance chimique et une très bonne tenue aux hautes températures, typiquement de l'ordre de 250°C à 300°C. De plus, les fluoroélastomères sont hautement résistants au styrène, en particulier jusqu'à près de 120°C, contrairement aux bâches thermoplastiques de l'art antérieur.

Il est ainsi possible d'obtenir une augmentation considérable de la durée de vie d'utilisation d'une bâche selon l'invention, notamment 80 fois supérieure, par rapport aux durées de vie des bâches thermoplastiques de l'art antérieur.

La bâche à vide selon l'invention peut en outre comporter l'une ou plusieurs des caractéristiques suivantes prises isolément ou suivant toutes combinaisons techniques possibles.

De façon avantageuse, le fluoroélastomère est de type FPM selon la norme ISO (ou FKM).

La bâche est avantageusement mise en forme par pulvérisation. De cette façon, il peut être possible de couvrir pratiquement tout type de géométrie tridimensionnelle des matériaux.

Avantageusement, l'utilisation de fluoroélastomère permet la mise en forme de la bâche par rapport aux bâches thermoplastiques de l'art antérieur, à savoir que la bâche peut ne plus être sous la forme d'un film mais en préforme souple capable d'épouser des formes complexes. Il peut ainsi en résulter un gain considérable en termes de temps, de coûts et de stockage.

La bâche est avantageusement thermiquement conductrice, présentant une conductivité thermique supérieure ou égale à 0,3 W/m.K⁻¹, notamment supérieure ou égale à 0,5 W/m.K⁻¹, notamment supérieure ou égale à 0,7 W/m.K⁻¹.

De façon avantageuse, la bâche selon l'invention est fortement conductrice thermiquement, notamment en comparaison avec les bâches thermoplastiques de l'art antérieur présentant typiquement une conductivité thermique d'environ 0,21 W/m.K⁻¹. Par exemple, avec une charge en carbone de 20 % en masse, la conductivité thermique du fluoroélastomère de type FKM est de l'ordre de 0,73 W/m.K⁻¹, ce qui représente un gain de plus de 250 % par rapport à une bâche thermoplastique selon l'art antérieur. Il est ainsi possible d'évacuer efficacement la chaleur issue de l'exothermie de réticulation des résines, notamment de la résine polyester insaturée et du styrène, et il est donc possible de réaliser des épaisseurs plus importantes sur certaines zones des éléments fabriqués en composite, par exemple des coques de bateaux. En effet, les épaisseurs de parois obtenues avec les solutions de l'art antérieur sont généralement limitées afin de ne pas avoir une exothermie trop importante lors de la réticulation qui pourrait être néfaste notamment au moule, aux fibres de verre et au gel de recouvrement utilisés.

Le fluoroélastomère peut comporter des charges à forte conductivité thermique choisies parmi : des charges métalliques, notamment aluminium, argent, cuivre, des charges céramiques, notamment alumine, nitrure d'aluminium, oxyde de zinc, nitrure de bore, et/ou des charges carbonées, notamment noir de carbone, graphite, entre autres.

Par ailleurs, l'invention a encore pour objet, selon un autre de ses aspects, un procédé d'infusion de matériaux composites, notamment des matériaux composites de type résine polyester/fibres de verre, caractérisé en ce qu'il comporte l'étape d'utilisation d'une bâche à vide telle que définie précédemment.

En outre, l'invention a encore pour objet, selon un autre de ses aspects, un procédé de fabrication d'une bâche à vide telle que définie précédemment, caractérisé en ce qu'il comporte les étapes successives suivantes :
a) préparation d'un mélange en suspension comprenant un fluoroélastomère,
b) mise en forme dudit mélange en suspension pour la réalisation d'une pluralité de structures monocouches ou multicouches à base de fluoroélastomère formant des bâches à vide.

L'étape a) de préparation d'un mélange en suspension peut comprendre : la réalisation d'une première solution comprenant du fluoroélastomère et son solvant, notamment une cétone et/ou un ester, par exemple du méthyléthylcétone, du methylisobutylcétone, de l'acétate de butyl, entre autres, ceci permettant de garder le fluoroélastomère en solution sans amorcer sa réticulation ; la réalisation d'une deuxième solution comprenant ledit solvant, du noir de carbone, éventuellement un agent thixotrope, par exemple de la silice pyrogénée, et de l'oxyde de magnésium, ceci permettant d'obtenir une solution de faible viscosité permettant de désagglomérer avec facilité les différentes charges et ainsi obtenir un matériau isotrope thermiquement et mécaniquement ; et le mélange des première et deuxième solutions.

L'étape b) de préparation de mise en forme peut comprendre la mise en œuvre d'un coulage en bande sur un banc de coulage.

En variante, l'étape b) de préparation de mise en forme peut comprendre la mise en œuvre d'un procédé de pulvérisation, par exemple de type godet ou pompe à piston.

La bâche à vide, le procédé d'infusion et le procédé de fabrication selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

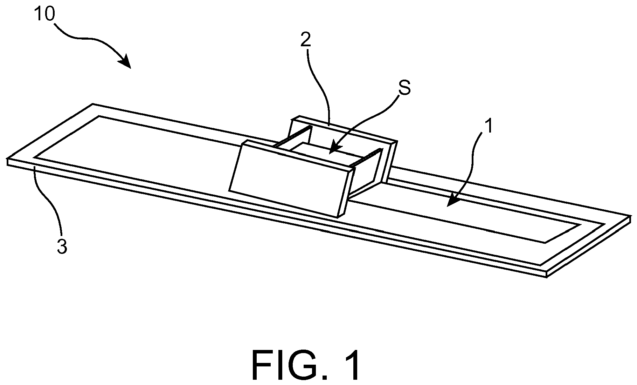

L'invention pourra être mieux comprise à la lecture de la description détaillée qui va suivre, d'exemples de mise en œuvre non limitatifs de celle-ci, ainsi qu'à l'examen de la figure 1 unique, schématique et partielle, du dessin annexé, qui représente un exemple du banc de coulage utilisé dans le procédé de fabrication d'une bâche à vide conforme à l'invention.

Les différentes parties représentées sur cette figure ne le sont pas nécessairement selon une échelle uniforme, pour rendre celle-ci plus lisible.

### EXPOSÉ DÉTAILLÉ DE MODES DE RÉALISATION PARTICULIERS

On va décrire ci-après un exemple de procédé de fabrication d'une bâche à vide 1 conforme à l'invention par coulage en bande.

Afin de pouvoir obtenir une quantité suffisante de suspension pour le coulage d'une à deux bandes d'un format équivalent à un format A4 permettant d'obtenir des bâches 1 conformes à l'invention, on réalise deux suspensions appelées encre n°1 et encre n°2.

Chaque suspension ou encre, comporte un mélange de fluoroélastomère de type FKM, de solvant, par exemple de méthyléthylcétone (MEK), de noir de carbone (CB) et d'oxyde de magnésium (MgO), respectivement dans des proportions massiques de 100, 300, 3 et 3.

Pour chaque suspension ou encre, les masses réelles utilisées sont d'environ 110 g pour le FKM, 330 g pour le solvant (MEK), 3 g pour le CB et 3 g pour le MgO.

Chaque suspension ou encre est alors réalisée en trois étapes successives décrites ci-après.

Tout d'abord, on réalise la préparation d'une première solution A. Pour ce faire, on place le FKM dans les 2/3 du volume de solvant. Puis, on agite vigoureusement jusqu'à obtenir une dissolution complète, à l'aide par exemple d'un moteur d'agitation à pales, d'un turbulat ou d'un mélangeur à rouleau.

Ensuite, on réalise la préparation d'une deuxième solution B. Pour ce faire, on place le CB et le MgO dans le dernier tiers de solvant (MEK). Puis, on homogénéise le mélange, par exemple sous agitation magnétique et ultra-sons.

Alors, on réalise la préparation de la suspension finale S. Pour ce faire, on verse la deuxième solution B dans la première solution A. On mélange notamment par le biais du moteur d'agitation à pales jusqu'à obtention d'une préparation homogène. Puis, on transvase le mélange des pommadiers. On désaère ensuite la suspension à l'aide d'un mélangeur planétaire, par exemple de type Mazerustar KK-400WE de la société Kurabo. Enfin, on place les pommadiers sur ce mélangeur à rouleaux pendant une longue durée, par exemple plus de 8 heures.

La mise en forme des bandes peut alors être réalisée par un procédé de coulage en bande sur un banc de coulage 10 tel que celui schématisé sur la figure 1, et en particulier sur un banc de coulage de la société Cerrinov.

Chaque bande multicouche de FKM est alors réalisée selon le protocole suivant : réglage de la hauteur du sabot 2 entre environ 100 µm et 3,5 mm et positionnement du sabot 2 sur le support 3 en résine du banc de coulage 10 ; dépôt de la suspension S obtenue précédemment, en particulier l'équivalent de trois pommadiers, au plus près de la racle et du support 3 ; mise en route du dispositif de coulage, avec une vitesse de déplacement du sabot 2 au minimum ; séchage à l'air libre pendant environ 6 heures avant réalisation d'une autre couche par-dessus de façon similaire ; réalisation d'un total de quatre couches.

La bande 1 multicouche obtenue, destinée à former la bâche 1 conforme à l'invention, est ensuite placée pendant une longue période, environ 48 h, dans une étuve à 60-100°C afin de réticuler partiellement le polymère et éliminer totalement le solvant de la bande. Si l'on souhaite réticuler totalement la bande, une température de 200°C pourra être appliquée sur une période d'environ 12h. L'épaisseur finale obtenue est de l'ordre de 2,1 mm. Toutefois, elle peut être comprise entre 20 µm et 2 mm par exemple suivant la hauteur initiale du sabot 2.

On va maintenant décrire ci-après un autre exemple de procédé de fabrication d'une bâche à vide 1 conforme à l'invention par pulvérisation.

Afin de pouvoir obtenir une quantité suffisante de suspension pour la pulvérisation d'un format équivalent à un format A4 permettant d'obtenir des bâches 1 conformes à l'invention, on réalise ici aussi deux suspensions appelées encre n°1 et encre n°2.

Chaque suspension ou encre, comporte un mélange de fluoroélastomère de type FKM, de solvants, par exemple de méthylisobutylcétone (MIBK) et de méthyl acétate ou butylacétate ou méthoxypropyl acétate, de noir de carbone (CB), d'oxyde de magnésium (MgO) et d'agent thixotrope (SiO₂), respectivement dans des proportions massiques de 100, 300, 3 , 3 et 4.

Pour chaque suspension ou encre, les masses réelles utilisées sont d'environ 100 g pour le FKM, 300 g pour les solvants, 3 g pour le CB, 3 g pour le MgO et 4 g pour l'agent thixotrope.

Chaque suspension ou encre est alors réalisée en trois étapes successives décrites ci-après.

Tout d'abord, on réalise la préparation d'une première solution A. Pour ce faire, on place le FKM dans les 2/3 du volume de solvants. Puis, on agite vigoureusement jusqu'à obtenir une dissolution complète, à l'aide par exemple d'un moteur d'agitation à pales, d'un turbulat ou d'un mélangeur à rouleau.

Ensuite, on réalise la préparation d'une deuxième solution B. Pour ce faire, on place le CB, le MgO et l'agent thixotrope dans le dernier tiers de solvants. Puis, on homogénéise le mélange, par exemple sous agitation magnétique et ultra-sons.

Alors, on réalise la préparation de la suspension finale S. Pour ce faire, on verse la deuxième solution B dans la première solution A. On mélange notamment par le biais du moteur d'agitation à pales jusqu'à obtention d'une préparation homogène.

La mise en forme de la bâche peut alors être réalisée par un procédé standard de pulvérisation, godet ou pompe à piston par exemple.

Chaque dépôt de couche pour réaliser des monocouches ou multicouches peut être réalisé toutes les 1 à 2 minutes avec un temps final de séchage d'environ 1h.

La bâche mono ou multicouche obtenue, destinée à former la bâche 1 conforme à l'invention, est ensuite placée pendant une longue période, environ 48 h, dans une étuve à 60-100°C afin de compléter la réticulation du polymère. L'épaisseur finale obtenue est comprise entre 100 µm et 400 µm suivant le nombre de dépôts. Elle peut être comprise entre 20 µm et 1 mm par exemple.

Bien entendu, l'invention n'est pas limitée aux exemples de réalisation qui viennent d'être décrits. Diverses modifications peuvent y être apportées par l'homme du métier.

## Revendications

1. Bâche (1) à vide pour un procédé d'infusion de matériaux composites de type résine polyester/fibres de verre, la bâche (1) à vide comportant un fluoroélastomère,
la bâche (1) à vide étant **caractérisée en ce qu'**elle est mise en forme sous la forme d'une préforme souple capable d'épouser des formes complexes de matériaux composites,
**en ce qu'**elle est thermiquement conductrice, présentant une conductivité thermique supérieure ou égale à 0,3 W/m.K⁻¹, et ainsi **en ce qu'**elle est configurée pour permettre l'évacuation de la chaleur issue de l'exothermie de réticulation des résines de sorte à pouvoir augmenter l'épaisseur de certaines zones d'éléments fabriqués en matériaux composites.

2. Bâche selon la revendication 1, **caractérisée en ce que** le fluoroélastomère est de type FPM selon la norme ISO.

3. Bâche selon la revendication 1 ou 2, **caractérisée en ce qu'**elle est mise en forme par pulvérisation.

4. Bâche selon l'une des revendications précédentes, **caractérisée en ce qu'**elle présente une conductivité thermique supérieure ou égale à 0,5 W/m.K⁻¹, notamment supérieure ou égale à 0,7 W/m.K⁻¹.

5. Bâche selon l'une quelconque des revendications précédentes, **caractérisée en ce que** le fluoroélastomère comporte des charges à forte conductivité thermique choisies parmi : des charges métalliques, notamment aluminium, argent, cuivre, des charges céramiques, notamment alumine, nitrure d'aluminium, oxyde de zinc, nitrure de bore, et/ou des charges carbonées, notamment noir de carbone, graphite.

6. Procédé d'infusion de matériaux composites, notamment des matériaux composites de type résine polyester/fibres de verre, **caractérisé en ce qu'**il comporte l'étape d'utilisation d'une bâche (1) à vide selon l'une quelconque des revendications précédentes.

7. Procédé de fabrication d'une bâche (1) à vide selon l'une quelconque des revendications 1 à 5, **caractérisé en ce qu'**il comporte les étapes successives suivantes :
a) préparation d'un mélange en suspension (S) comprenant un fluoroélastomère,
b) mise en forme dudit mélange en suspension pour la réalisation d'une pluralité de structures monocouches ou multicouches à base de fluoroélastomère formant des bâches (1) à vide.

8. Procédé selon la revendication 7, **caractérisé en ce que** l'étape a) de préparation d'un mélange en suspension (S) comprend la réalisation d'une première solution (A) comprenant du fluoroélastomère et son solvant, notamment une cétone et/ou un ester, par exemple du méthyléthylcétone, du methylisobutylcétone ou de l'acétate de butyl, la réalisation d'une deuxième solution (B) comprenant ledit solvant, du noir de carbone, éventuellement un agent thixotrope, par exemple de la silice pyrogénée, et de l'oxyde de magnésium, et le mélange des première (A) et deuxième (B) solutions.

9. Procédé selon la revendication 7 ou 8, **caractérisé en ce que** l'étape b) de préparation de mise en forme comprend la mise en œuvre d'un coulage en bande sur un banc de coulage (10).

10. Procédé selon la revendication 7 ou 8, **caractérisé en ce que** l'étape b) de préparation de mise en forme comprend la mise en œuvre d'un procédé de pulvérisation, par exemple de type godet ou pompe à piston.

## Patentansprüche

1. Vakuumfolie (1) für ein Verfahren zur Infusion von Verbundwerkstoffen vom Typ Polyesterharz/Glasfasern, wobei die Vakuumfolie (1) ein Fluorelastomer umfasst, wobei die Vakuumfolie (1) **dadurch gekennzeichnet ist, dass** sie in Form eines flexiblen Vorformlings in Form gebracht wird, der in der Lage ist, sich eng an komplexe Verbundwerkstoffformen anzulegen,
dadurch, dass sie wärmeleitend ist, wobei sie eine Wärmeleitfähigkeit größer oder gleich 0,3 W/m.K⁻¹ aufweist, und somit dadurch, dass sie dazu ausgebildet ist, das Abführen der aus der Vernetzungsexothermie der Harze hervorgegangenen Wärme zu ermöglichen, so dass die Dicke bestimmter Bereiche von aus Verbundwerkstoffen hergestellten Teilen erhöht werden kann.

2. Folie nach Anspruch 1, **dadurch gekennzeichnet, dass** das Fluorelastomer vom Typ FPM gemäß der ISO-Norm ist.

3. Folie nach Anspruch 1 oder 2, **dadurch gekennzeichnet, dass** sie durch Spritzen in Form gebracht wird.

4. Folie nach einem der vorhergehenden Ansprüche, **dadurch gekennzeichnet, dass** sie eine Wärmeleitfähigkeit größer oder gleich 0,5 W/m.K⁻¹, insbesondere größer oder gleich 0,7 W/m.K⁻¹ aufweist.

5. Folie nach einem der vorhergehenden Ansprüche, **dadurch gekennzeichnet, dass** das Fluorelastomer Füllstoffe mit hoher Wärmeleitfähigkeit beinhaltet, die gewählt sind unter: metallischen Füllstoffen, insbesondere Aluminium, Silber, Kupfer, keramischen Füllstoffen, insbesondere Aluminiumoxid, Aluminiumnitrid, Zinkoxid, Bornitrid, und/oder kohlenstoffhaltigen Füllstoffen, insbesondere Ruß, Graphit.

6. Infusionsverfahren für Verbundwerkstoffe, insbesondere Verbundwerkstoffe vom Typ Polyesterharz/Glasfasern, **dadurch gekennzeichnet, dass** es den Schritt der Verwendung einer Vakuumfolie (1) nach einem der vorhergehenden Ansprüche umfasst.

7. Verfahren zur Herstellung einer Vakuumfolie (1) nach einem der Ansprüche 1 bis 5, **dadurch gekennzeichnet, dass** es die folgenden aufeinander folgenden Schritte umfasst:
a) Vorbereiten eines suspendierten Gemisches (S), das ein Fluorelastomer umfasst,
b) Informbringen des suspendierten Gemisches zum Ausführen einer Vielzahl von einlagigen oder mehrlagigen Strukturen auf Fluorelastomerbasis, so dass Vakuumfolien (1) gebildet werden.

8. Verfahren nach Anspruch 7, **dadurch gekennzeichnet, dass** der Schritt a) des Vorbereitens eines suspendierten Gemisches (S) das Herstellen einer ersten Lösung (A), die Fluorelastomer und sein Lösungsmittel umfasst, insbesondere ein Keton und/oder einen Ester, zum Beispiel Methylethylketon, Methylisobutylketon oder Butylacetat, das Herstellen einer zweiten Lösung (B), die das Lösungsmittel, Ruß, gegebenenfalls ein Thixotropiermittel, zum Beispiel pyrogenes Siliciumdioxid, und Magnesiumoxid, und das Mischen der ersten (A) und zweiten (B) Lösungen umfasst.

9. Verfahren nach Anspruch 7 oder 8, **dadurch gekennzeichnet, dass** der Schritt b) des Vorbereitens des Informbringens das Ausführen eines Bandgießens auf einem Gießtisch (10) umfasst.

10. Verfahren nach Anspruch 7 oder 8, **dadurch gekennzeichnet, dass** der Schritt b) des Vorbereitens des Informbringens das Ausführen eines Spritzverfahrens umfasst, zum Beispiel vom Becher- oder Kolbenpumpentyp.

## Claims

1. A vacuum cover (1) for a method for infusing polyester resin/glass fibres type composite materials, the vacuum cover (1) including a fluoroelastomer,
the vacuum cover (1) being **characterised in that** it is shaped in the form of a flexible preform able to snugly fit complex shapes of composite materials, **in that** it is thermally conducting, having a thermal conductivity greater than or equal to 0.3W/m.K⁻¹, and thus **in that** it is configured for discharging heat from cross-linking exotherm of resins so as to be able to increase thickness of some zones of elements manufactured from composite materials.

2. The cover according to claim 1, **characterised in that** the fluoroelastomer is of FPM type according to the ISO standard.

3. The cover according to claim 1 or 2, **characterised in that** it is shaped by spraying.

4. The cover according to one of the previous claims, **characterised in that** it has a thermal conductivity greater than or equal to 0.5W/m.K⁻¹, especially greater than or equal to 0.7W/m.K⁻¹.

5. The cover according to any of the previous claims, **characterised in that** the fluoroelastomer includes high thermal conductivity fillers selected from: metal especially aluminium, silver, copper, fillers, ceramic fillers, especially alumina, aluminium nitride, zinc oxide, boron nitride, and/or carbon fillers, especially carbon black, graphite.

6. A method for infusing composite materials, especially polyester resin/glass fibres type composite materials, **characterised in that** it includes the step of using a vacuum cover (1) according to any of the previous claims.

7. A method for manufacturing a vacuum cover (1) according to any of claims 1 to 5, **characterised in that** it includes the following successive steps of:
a) preparing a suspended mixture (S) comprising a fluoroelastomer,
b) shaping said suspended mixture for making a plurality of fluoroelastomer-based single layer or multilayer structures forming vacuum covers (1).

8. The method according to claim 7, **characterised in that** the step a) of preparing a suspended mixture (S) comprises making a first solution (A) comprising fluoroelastomer and its solvent, especially a ketone and/or ester, for example methylethylketone, methylisobutylketone or butyl acetate, making a second solution (B) comprising said solvent, carbon black, possibly a thixotropic agent, for example pyrogenic silica, and magnesium oxide, and mixing the first (A) and second (B) solutions.

9. The method according to claim 7 or 8, **characterised in that** step b) for preparing shaping comprises implementing a tape casting on a casting bench (10).

10. The method according to claim 7 or 8, **characterised in that** the step b) of preparing shaping comprises implementing a spraying method, for example of the bucket or piston pump type.
